# EUROPEAN PATENT APPLICATION

(11) **EP 4 645 156 A1**
(43) Date of publication of application: **05.11.2025**
(21) Application number: 24173282.5
(22) Date of filing: 30.04.2024
(51) Int. Cl.: G06F 40/131, G06F 40/216, G06F 40/289

(54) **METHOD AND SYSTEM FOR TEXT SEGMENTATION**

(71) Applicant: Siemens Aktiengesellschaft, 80333 München (DE)
(72) Inventor: Moldovan, Marco, 85598 Baldham (DE); Langer, Stefan, 80797 München (DE)
(74) Representative: Siemens Patent Attorneys

(57) **Abstract**

The method is based on embedding (4), by a pre-trained language model, each sentence contained in an input text into a dense vector representation and thereby forming a sequence of sentence embeddings, processing (5) the sequence of sentence embeddings by sequentially traversing a sliding window through the sequence of sentence embeddings, wherein a window position is defined by a location of a center of the window in the sequence of sentence embeddings, and computing, for each window position, a first mean vector representation for sentence embeddings in a first half of the window and a second mean vector representation for sentence embeddings in a second half of the window, calculating (6) a boundary score for each window position by computing the cosine similarity between the corresponding first mean vector representation and second mean vector representation, identifying (7) peaks in the boundary scores, segmenting (8) the input text at the identified peaks into a sequence of text segments, and outputting (9) the sequence of text segments. The algorithm provides contextually relevant and semantically coherent segments, thus enhancing the performance of RAG pipelines, leading to more accurate and contextually appropriate outputs. The algorithm is also highly efficient.

## Description

### Technical Field

The application relates to segmenting text into semantically coherent segments. This type of text segmentation is specifically tailored for integration with a Retrieval-Augmented Generation (RAG) pipeline. The primary objective is to ensure that each text segment is not only semantically self-contained but also maximally relevant to the context of the larger text. This segmentation facilitates more effective information retrieval and enhances the quality of subsequent generative processes in the RAG pipeline, crucial for applications like document summarization, content analysis, and advanced natural language processing tasks.

### Background Art

Prior approaches to text segmentation have been relatively simplistic and less contextually aware. Common methods include:
- Max Token Length Splitting: Segmenting text based purely on a predefined maximum token length, which often disregards semantic coherence.
- Markup/HTML Headline-Based Splitting: Utilizing structural markers like HTML or markdown headings to define segments, which is limited to texts with such explicit structural markers and does not apply to unstructured text.
- Statistical Word Frequency Algorithms: These approaches segment text based on changes in word frequency patterns. While this method is more sophisticated than the previous two, it still can miss nuanced semantic shifts and is often influenced by common but semantically irrelevant words.

### Summary of Invention

Analogously to WO 2022022954 A1, it is an object of this invention to provide a method and system that converts input text into semantically coherent text segments that are tailored for integration with a RAG pipeline, thus facilitating more effective information retrieval and enhancing the quality of subsequent generative processes in the RAG pipeline, which is crucial for applications like document summarization, content analysis, and advanced natural language processing tasks. The text segmentation needs to be highly efficient, capable of processing very large text corpora swiftly, so that it can enable the operation of a fully automated RAG pipeline. In summary, a highly sophisticated and efficient segmentation strategy is required for the conversion.

The objectives of the invention are solved by the independent claims. Further advantageous arrangements and embodiments of the invention are set forth in the respective dependent claims.

According to the method for text segmentation, the following operations are performed by components, wherein the components are hardware components and/or software components executed by one or more processors:
- embedding, by a pre-trained language model, each sentence contained in an input text into a dense vector representation and thereby forming a sequence of sentence embeddings,
- processing the sequence of sentence embeddings by sequentially traversing a sliding window through the sequence of sentence embeddings, wherein a window position is defined by a location of a center of the window in the sequence of sentence embeddings, and computing, for each window position, a first mean vector representation for sentence embeddings in a first half of the window and a second mean vector representation for sentence embeddings in a second half of the window,
- calculating a boundary score for each window position by computing the cosine similarity between the corresponding first mean vector representation and second mean vector representation,
- identifying peaks in the boundary scores,
- segmenting the input text at the identified peaks into a sequence of text segments, and
- outputting the sequence of text segments.

The system for text segmentation comprises the following components, wherein the components are hardware components and/or software components executed by one or more processors:
- a pre-trained language model, configured for embedding each sentence contained in an input text into a dense vector representation and thereby forming a sequence of sentence embeddings, and
- one or more components, configured for
   - processing the sequence of sentence embeddings by sequentially traversing a sliding window through the sequence of sentence embeddings, wherein a window position is defined by a location of a center of the window in the sequence of sentence embeddings, and computing, for each window position, a first mean vector representation for sentence embeddings in a first half of the window and a second mean vector representation for sentence embeddings in a second half of the window,
- calculating a boundary score for each window position by computing the cosine similarity between the corresponding first mean vector representation and second mean vector representation,
- identifying peaks in the boundary scores,
- segmenting the input text at the identified peaks into a sequence of text segments, and
- outputting the sequence of text segments.

The following advantages and explanations are not necessarily the result of the object of the independent claims. Rather, they may be advantages and explanations that only apply to certain embodiments or variants.

The term "computer" should be interpreted as broadly as possible, in particular to cover all electronic devices with data processing properties. Computers can thus, for example, be personal computers, servers, clients, programmable logic controllers (PLCs), handheld computer systems, pocket PC devices, mobile radio devices, smartphones, or any other communication devices that can process data with computer support, for example processors or other electronic devices for data processing. Computers can in particular comprise one or more processors and memory units.

In connection with the invention, a "memory", "memory unit" or "memory module" and the like can mean, for example, a volatile memory in the form of random-access memory (RAM) or a permanent memory such as a hard disk, a solid state drive or a Disk.

The method and system, or at least some of their embodiments, can ensure that each segment is semantically coherent, not just arbitrarily delimited - unlike existing approaches such as max token length or markup-based segmentation.

The method and system, or at least some of their embodiments, use a sliding window approach. This focus on semantic shifts creates segments that are contextually relevant and meaningful, an aspect that statistical word frequency methods can miss.

The method and system, or at least some of their embodiments, are not constrained by the need for specific structural markers or text formats, making them broadly applicable to a wide range of text types.

The method and system, or at least some of their embodiments, provide more contextually relevant and semantically coherent segments. This enhances the performance of RAG pipelines, leading to more accurate and contextually appropriate outputs.

The method and system, or at least some of their embodiments, are efficient as the unsupervised nature of the algorithm and its reliance on pre-trained language models for embeddings translate to efficiency, both in terms of computational resources and the need for labeled data.

The method and system, or at least some of their embodiments, combine sentence embeddings with a sliding window technique for boundary score calculation, enabling them to discern semantic shifts with a level of precision and relevance not attainable by the existing methods.

The method and system, or at least some of their embodiments, allow for unsupervised operation, as they do not require any additional training or fine-tuning. They leverage pre-trained language models for sentence embeddings, allowing them to be directly applied to text data without the need for labeled training datasets. This aspect substantially reduces the overhead involved in preparing and processing the data, making it more straightforward and resource-efficient compared to methods that require supervised learning or extensive manual configuration.

The method and system, or at least some of their embodiments, are capable of segmenting very large text corpora swiftly. This efficiency stems from the methodological efficiency of the sliding window technique coupled with the computational efficiency of using pre-trained embeddings. The algorithm's design ensures that it can handle large volumes of text data rapidly, making it particularly suitable for applications that involve processing extensive corpora, such as large-scale content analysis, information retrieval systems, and comprehensive document summarization tasks.

The method and system, or at least some of their embodiments, work effectively without the requirement for fine-tuning on specific text types or domains. This attribute underscores their versatility and ease of integration into various applications, significantly broadening their usability across different sectors and use cases.

### Description of Embodiments

In an embodiment of the method and system, the identifying operation uses a minimum peak distance constraint ensuring that identified peaks are separated by at least a predefined number of sentences.

This embodiment mitigates the risk of generating segments that are overly short or semantically disjointed, which might occur if subsequent sentences are each treated as separate segments. This embodiment is crucial in maintaining a balance between capturing meaningful semantic shifts and preserving the contextual and narrative continuity of the segments.

An embodiment of the method and system comprises the initial operations of
- receiving, by a memory interface, by a network interface, or by a user interface, raw text,
- preprocessing the raw text to provide cleaned text, in particular
   - by removing extraneous whitespace and punctuation from the raw text, and/or
   - by lowercasing the raw text,
- tokenizing, by a sentence boundary detection algorithm, the cleaned text into individual sentences, thereby forming the input text.

The computer program product comprises instructions which, when the program is executed by a computer, cause the computer to carry out the method.

The provisioning device stores and/or provides the computer program product.

### Brief Description of the Drawing

The foregoing and other aspects of the present invention are best understood from the following detailed description when read in connection with the accompanying drawings. For the purpose of illustrating the invention, the drawings show embodiments that are presently preferred. However, the invention is not limited to the specific instrumentalities disclosed. The embodiments may be combined with each other. Furthermore, the embodiments may be combined with any of the features described above. Unless stated otherwise, identical reference signs denote the same features or functionally identical elements between drawings. Included in the drawings are the following Figures:
- Fig. 1: shows a first embodiment,
- Fig. 2: shows another embodiment, and
- Fig. 3: shows a flowchart of a possible exemplary embodiment.

In the following description, various aspects of the present invention and embodiments thereof will be described. However, it will be understood by those skilled in the art that embodiments may be practiced with only some or all aspects thereof. For purposes of explanation, specific numbers and configurations are set forth in order to provide a thorough understanding. However, it will also be apparent to those skilled in the art that the embodiments may be practiced without these specific details.

The described components can each be hardware components or software components. For example, a software component can be a software module such as a software library; an individual procedure, subroutine, or function; or, depending on the programming paradigm, any other portion of software code that implements the function of the software component. A combination of hardware components and software components can occur, in particular, if some of the effects according to the invention are preferably exclusively implemented by special hardware (e.g., a processor in the form of an ASIC or FPGA) and some other part by software.

### Description of Examples

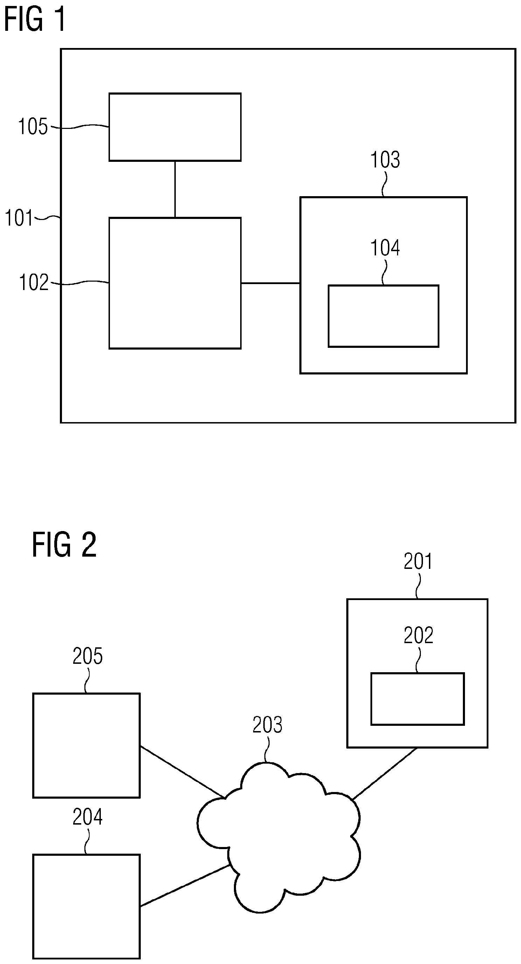

Fig. 1 shows one sample structure for computer-implementation of the invention which comprises:
- (101): computer system
- (102): processor
- (103): memory
- (104): computer program (product)
- (105): user interface

In this embodiment of the invention the computer program 104 comprises program instructions for carrying out the invention. The computer program 104 is stored in the memory 103 which renders, among others, the memory 103 and/or its related computer system 101 a provisioning device for the computer program 104. The computer system 101 may carry out the invention by executing the program instructions of the computer program 104 by the processor 102. Results of invention may be presented on the user interface 105. Alternatively, they may be stored in the memory 103 or on another suitable means for storing data.

Fig. 2 shows another sample structure for computer-implementation of the invention which comprises:
- (201): provisioning device
- (202): computer program (product)
- (203): computer network/Internet
- (204): computer system
- (205): mobile device/smartphone

In this embodiment the provisioning device 201 stores a computer program 202 which comprises program instructions for carrying out the invention. The provisioning device 201 provides the computer program 202 via a computer network/Internet 203. By way of example, a computer system 204 or a mobile device/smartphone 205 may load the computer program 202 and carry out the invention by executing the program instructions of the computer program 202.

In a variation of this embodiment, the provisioning device 201 is a computer-readable storage medium, for example a SD card, that stores the computer program 202 and is connected directly to the computer system 204 or the mobile device/smartphone 205 in order for it to load the computer program 202 and carry out the invention by executing the program instructions of the computer program 202.

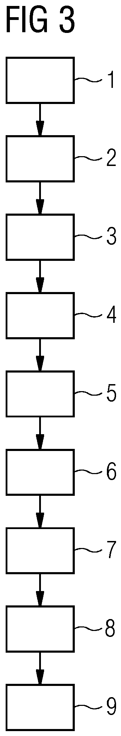

Preferably, the embodiment shown in Fig. 3 can be implemented with a structure as shown in Fig. 1 or Fig. 2.

Fig. 3 shows a flowchart of a possible exemplary embodiment of a Sliding Window Text Segmentation Algorithm. It is designed to systematically partition a given text corpus into semantically coherent segments. The process involves several distinct operations, each contributing to an unsupervised identification of text boundaries that represent significant semantic shifts.

In a receiving operation 1, the algorithm receives raw text as input data, for example via a memory interface, a network interface, or a user interface. The raw text is typically, but not necessarily, a continuous block of natural language, devoid of explicit structural segmentations such as chapters or subheadings.

In a preprocessing operation 2, the raw text undergoes preprocessing to clean and standardize the input data. This step might involve removing extraneous whitespace, punctuation, and possibly lowercasing the raw text for uniformity, and outputs cleaned text as a result.

In a tokenizing operation 3, the cleaned text is tokenized into individual sentences using a sentence boundary detection algorithm, which identifies sentence-ending punctuations and splits the cleaned text accordingly. The result is tokenized text, serving as input text for the main operations of the algorithm.

In an embedding operation 4, each sentence from the tokenized text is transformed into a dense vector representation, known as an embedding. This transformation is executed using a pre-trained language model (such as BERT or similar), which captures the contextual semantics of each sentence in a high-dimensional space. As a result, a sequence of sentence embeddings is formed.

In a processing operation 5, a fixed-size sliding window is employed to traverse through the sequence of sentence embeddings sequentially. At each position of the window, the embodiment computes mean vector representations for two groups of sentences: those on the left side and those on the right side of the window's center. The window size (number of sentences encompassed by the window) is a predefined parameter that can be adjusted based on the text characteristics and desired granularity of segmentation.

In a calculating operation 6, a boundary score is calculated for each window position. Each boundary score is derived from the cosine similarity between the mean vector representations of the left and right groups of sentences within the window. A high boundary score indicates a significant semantic shift or change in topic between the groups of sentences.

In an identifying operation 7, peaks in the boundary scores are identified which correspond to potential text segment boundaries. The peaks are at positions where the boundary scores are highest, as these positions are indicative of substantial semantic transitions. The identified peaks later serve as segmentation points as they delineate the boundaries of semantically coherent text segments.

In a segmenting operation 8, the text is segmented at the identified peaks into a sequence of text segments, each representing a coherent semantic unit of the original text. The text segments are ordered sequentially, preserving the inherent flow and narrative structure of the original text.

In an outputting operation 9, the current embodiment outputs the sequence of text segments.

A preferred embodiment uses a minimum peak distance constraint for the identifying operation 7. This constraint ensures that any two peaks are separated by at least a predefined number of sentences. This separation distance is a configurable parameter of the current embodiment. By setting this minimum distance between peaks, the current embodiment effectively avoids selecting neighboring peaks as segment boundaries. This approach mitigates the risk of generating segments that are overly short or semantically disjointed, which might occur if subsequent sentences are each treated as separate segments. During the boundary score analysis, when a peak is identified, the algorithm temporarily ignores any subsequent peaks that fall within the minimum distance threshold. This logic ensures that once a segment boundary is established, the algorithm will not consider creating another boundary until it has traversed the minimum number of sentences specified by the threshold. This mechanism is crucial in maintaining a balance between capturing meaningful semantic shifts and preserving the contextual and narrative continuity of the segments.

The above-described embodiment can detect text segments of varying lengths, respecting their semantic coherence. It is designed to detect text segments that are semantically coherent within themselves while being distinct from adjacent text segments.

The above-described embodiment is capable to discern semantic boundaries in an unsupervised manner, without reliance on predefined labels or markers. This feature makes it particularly advantageous for processing large, unstructured text corpora where explicit segment demarcations are absent. The algorithm's performance is contingent on the quality of sentence embeddings and the chosen window size, which can be fine-tuned to optimize segmentation results for different types of texts.

For example, the method can be executed by one or more processors. Examples of processors include a microcontroller or a microprocessor, an Application Specific Integrated Circuit (ASIC), or a neuromorphic microchip, in particular a neuromorphic processor unit. The processor can be part of any kind of computer, including mobile computing devices such as tablet computers, smartphones or laptops, or part of a server in a control room or cloud.

The above-described method may be implemented via a computer program product including one or more computer-readable storage media having stored thereon instructions executable by one or more processors of a computing system. Execution of the instructions causes the computing system to perform acts corresponding with the operations of the method described above.

The instructions for implementing processes or methods described herein may be provided on computer-readable storage media or memories, such as a cache, buffer, RAM, FLASH, removable media, hard drive, or other computer readable storage media. Computer readable storage media include various types of volatile and non-volatile storage media. The functions, acts, or tasks illustrated in the figures or described herein may be executed in response to one or more sets of instructions stored in or on computer readable storage media. The functions, acts or tasks may be independent of the particular type of instruction set, storage media, processor or processing strategy and may be performed by software, hardware, integrated circuits, firmware, micro code, and the like, operating alone or in combination. Likewise, processing strategies may include multiprocessing, multitasking, parallel processing, and the like.

The invention has been described in detail with reference to embodiments thereof and examples. Variations and modifications may, however, be effected within the spirit and scope of the invention covered by the claims. The phrase "A, B and/or C" as an alternative expression may provide that one or more of A, B and C may be used.

Independent of the grammatical term usage, individuals with male, female, or other gender identities are included within the term.

## Claims

1. A computer implemented method for text segmentation, wherein the following operations are performed by components, and wherein the components are hardware components and/or software components executed by one or more processors:
- embedding (4), by a pre-trained language model, each sentence contained in an input text into a dense vector representation and thereby forming a sequence of sentence embeddings,
- processing (5) the sequence of sentence embeddings by sequentially traversing a sliding window through the sequence of sentence embeddings, wherein a window position is defined by a location of a center of the window in the sequence of sentence embeddings, and computing, for each window position, a first mean vector representation for sentence embeddings in a first half of the window and a second mean vector representation for sentence embeddings in a second half of the window,
- calculating (6) a boundary score for each window position by computing the cosine similarity between the corresponding first mean vector representation and second mean vector representation,
- identifying (7) peaks in the boundary scores,
- segmenting (8) the input text at the identified peaks into a sequence of text segments, and
- outputting (9) the sequence of text segments.

2. The method of claim 1, wherein the identifying operation (7) uses a minimum peak distance constraint ensuring that identified peaks are separated by at least a predefined number of sentences.

3. The method according to any of the preceding claims,
comprising the initial operations of
- receiving (1), by a memory interface, by a network interface, or by a user interface, raw text,
- preprocessing (2) the raw text to provide cleaned text, in particular
- by removing extraneous whitespace and punctuation from the raw text, and/or
- by lowercasing the raw text,
- tokenizing (3), by a sentence boundary detection algorithm, the cleaned text into individual sentences, thereby forming the input text.

4. A system for text segmentation, comprising the following components, wherein the components are hardware components and/or software components executed by one or more processors:
- a pre-trained language model, configured for embedding (4) each sentence contained in an input text into a dense vector representation and thereby forming a sequence of sentence embeddings, and
- one or more components, configured for
- processing (5) the sequence of sentence embeddings by sequentially traversing a sliding window through the sequence of sentence embeddings, wherein a window position is defined by a location of a center of the window in the sequence of sentence embeddings, and computing, for each window position, a first mean vector representation for sentence embeddings in a first half of the window and a second mean vector representation for sentence embeddings in a second half of the window,
- calculating (6) a boundary score for each window position by computing the cosine similarity between the corresponding first mean vector representation and second mean vector representation,
- identifying (7) peaks in the boundary scores,
- segmenting (8) the input text at the identified peaks into a sequence of text segments, and
- outputting (9) the sequence of text segments.

5. A computer program product comprising instructions which, when the program is executed by a computer, cause the computer to carry out a method according to one of the method claims.

6. A provisioning device for the computer program product according to the preceding claim, wherein the provisioning device stores and/or provides the computer program product.
